# EUROPÄISCHE PATENTANMELDUNG

(11) **EP 1 022 594 A2**
(43) Veröffentlichungstag der Anmeldung: **26.07.2000**
(21) Anmeldenummer: 00100782.2
(22) Anmeldetag: 15.01.2000
(51) Int. Cl.: G02B 6/26

(54) **Faseroptischer Kopfteil zur Erzeugung mehrerer sich im wesentlichen in einer Richtung ausbreitender Lichtstrahlen**

(30) Priorität: 21.01.1999 DE 19902241
(71) Anmelder: DLR Deutsches Zentrum für Luft- und Raumfahrt e.V., 53175 Bonn (DE)
(72) Erfinder: Menschig, Arnd, Dr., 71093 Weil im Schönbuch (DE); Brauch, Uwe, Dr., 70565 Stuttgart (DE)
(74) Vertreter: Hoeger, Stellrecht & Partner

(57) **Zusammenfassung**

Um ein Kopfteil zur Erzeugung mehrerer, sich im wesentlichen in einer Richtung ausbreitender und in definiertem Abstand voneinander angeordneter Lichtstrahlen zu schaffen, wird vorgeschlagen
eine Vielzahl von Lichtleitern mit Endflächen vorzusehen, aus denen jeweils ein Lichtstrahl austritt,
eine Positioniereinheit umfassend ein plattenförmiges Positionierelement vorzusehen, welches eine der Zahl der Lichtleiter entsprechende Zahl von die Lichtleiter in definiertem Abstand zueinander positionierenden Positionierdurchbrüchen aufweist, und eine Fixierung für die Lichtleiter vorzusehen, welche die Lichtleiter derart relativ zu der Positioniereinheit fixiert hält, daß nahe einer Seite des Positionierelements die Endflächen der Lichtleiter in einer definierten geometrischen Ausrichtfläche liegen.

## Beschreibung

Die Erfindung betrifft ein Kopfteil zur Erzeugung mehrerer, sich im wesentlichen in einer Richtung ausbreitender und in definiertem Abstand voneinander angeordneter Lichtstrahlen, wobei die Lichtstrahlen Abstände von weniger als 1 mm, vorzugsweise weniger als 500 µm aufweisen.

Derartiger Kopfteile waren mit den bisher vorliegenden Technologien nur mit hohem Aufwand und ungenügender Präzision, im Fall einer Vielzahl von zu erzeugenden Lichtstrahlen nahezu nicht herstellbar.

Der Erfindung liegt daher die Aufgabe zugrunde, ein derartiges Kopfteil herzustellen, bei welchem einerseits eine ausreichende Präzision beim Abstand der Lichtstrahlen eingehalten werden kann und außerdem eine hohe Zahl von Lichtstrahlen erzeugbar ist.

Diese Aufgabe wird bei einem Kopfteil zur Erzeugung mehrerer, sich im wesentlichen in einer Richtung ausbreitender und in definiertem Abstand voneinander angeordneter Lichtstrahlen dadurch gelöst, daß das Kopfteil eine Vielzahl von Lichtleitern mit Endflächen, aus denen jeweils ein Lichtstrahl austritt, umfaßt, daß eine Positioniereinheit, umfassend ein plattenförmiges Positionierelement, vorgesehen ist, welches eine der Zahl der Lichtleiter entsprechende Zahl von die Lichtleiter in definiertem Abstand zueinander positionierenden Positionierdurchbrüchen aufweist, und eine Fixierung für die Lichtleiter, welche die Lichtleiter derart relativ zu der Positioniereinheit fixiert hält, daß nahe einer Seite des Positionierelements die Endflächen der Lichtleiter in einer definierten geometrischen Ausrichtfläche liegen.

Der Vorteil der erfindungsgemäßen Lösung ist darin zu sehen, daß einerseits durch das Positionierelement die Möglichkeit besteht, die Abstände der Lichtleiter und somit auch die Abstände der Lichtstrahlen voneinander definiert festzulegen und daß andererseits durch die Fixierung der Lichtleiter in der definierten geometrischen Ausrichtfläche die Austrittsorte der Lichtstrahlen relativ zueinander, und zwar in Ausbreitungsrichtung der Lichtstrahlen, exakt festlegbar sind. Damit besteht eine vorteilhafte Möglichkeit, auch in Mikrodimensionen exakt vorgebbare optische Verhältnisse auch bei einer Vielzahl von Lichtleitern zu schaffen.

Unter einem Lichtleiter im Sinne der erfindungsgemäßen Lösung ist dabei jede Art von Strahlungsleiter zu verstehen, welcher elektromagnetische Strahlung im Bereich vom Ultravioletten bis ins Infrarote führt.

Desweiteren sind auch unter dem Begriff "Lichtstrahl" alle aus den Lichtleitern austretenden und in diesen Spektralbereichen liegenden elektromagnetischen Wellen zu verstehen.

Hinsichtlich der Positionierung der Endflächen in der definierten geometrischen Ausrichtfläche sind die unterschiedlichsten Lösungen denkbar. Eine besonders vorteilhafte Lösung sieht vor, daß die Fixierung ein für die Lichtstrahlen durchlässiges und sich flächenhaft erstreckendes Anlageelement umfaßt, welches in der definierten geometrischen Ausrichtfläche liegende Anlageflächen aufweist, an welchen die Lichtleiter mit ihren Endflächen anliegen. Der Vorteil dieser Lösung ist darin zu sehen, daß damit eine einfache Möglichkeit besteht, einerseits die definierte geometrische Ausrichtfläche vorzugeben und andererseits dann auch beim Zusammenbau des erfindungsgemäßen Kopfteils die Endflächen in der definierten geometrischen Fläche zu positionieren. Insbesondere besteht die Möglichkeit, die Endflächen lediglich gegen die Anlageflächen anzulegen, ohne diese an den Anlageflächen fixieren zu müssen, ohne die Präzision der Positionierung der Endflächen in der definierten geometrischen Ausrichtfläche zu beeinträchtigen.

Ein erfindungsgemäßer Lichtleichter kann in unterschiedlichster Art und Weise aufgebaut sein. Beispielsweise wäre es denkbar, diesen so aufzubauen, daß dieser beispielsweise eine Lichtwellenführung, beispielsweise eine Singlemodefaser oder eine Multimodefaser umfaßt, welche von einem Schutzmantel umgeben ist. Alternativ dazu ist es aber auch denkbar, die Lichtwellenführung aus einer Vielzahl von Fasern, wie beispielsweise im Fall von Licht- oder Bildleitern, aufzubauen und diese Lichtwellenführung mit einem Schutzmantel zu umgeben.

Ein Schutzmantel bei den erfindungsgemäßen Lichtleitern ist vorzugsweise ein Kunststoffmantel, welcher die Lichtwellenführung umgibt.

Die Positionierung des Lichtleiters durch das Positionierelement kann daher in unterschiedlichster Art und Weise erfolgen. Beispielsweise wäre es denkbar, daß das Positionierelement den Lichtleiter als Ganzes, d.h. mit Lichtwellenführung und diese umschließend ein Schutzmantel positioniert.

Eine noch exaktere Positionierung der Lichtstrahlen zueinander ist dadurch möglich, daß das Positionierelement einen die Lichtwellenführung des Lichtleiters positionierenden Positionierdurchbruch aufweist, so daß unmittelbar eine Positionierung der Lichtwellenführung erfolgt und somit die Toleranzen zwischen dem Schutzmantel und der Lichtwellenführung nicht in die Positionierung der Lichtstrahlen relativ zueinander eingehen, so daß dadurch eine noch größere Präzision bei der Positionierung der Lichtstrahlen relativ zueinander erreichbar ist.

Die Positionierung des gesamten Lichtleiters oder der Lichtwellenführung in dem Positionierdurchbruch kann beispielsweise so ausgeführt sein, daß der Positionierdurchbruch eine den Lichtleiter oder die Lichtwellenführung umfassende Positionierfläche aufweist. Konstruktiv einfacher und vorteilhafter und insbesondere hinsichtlich einer genauen Positionierung ausreichend ist es, wenn der Positionierdurchbruch nur abschnittsweise am Umfang des Lichtleiters oder der Lichtwellenführung anliegende Positionierflächen aufweist, welche beispielsweise durch Bereiche von Seitenflächen eines Vielecks gebildet werden können.

Da in einem derartigen Positionierdurchbruch für die Lichtwellenführung des Lichtleiters, insbesondere dann, wenn dieser auch noch enge Toleranzen gegenüber der Lichtwellenführung aufweisen soll, die Lichtwellenführung schwer einführbar ist, ist vorzugsweise vorgesehen, daß auf einer der Ausrichtfläche gegenüberliegenden Seite des Positionierelements mindestens ein Vorpositionierelement für die Lichtleiter vorgesehen ist, welche dazu eingesetzt werden können, die Lichtleiter so vorzupositionieren, daß ein einfaches Einführen des Lichtleiters in den Führungsdurchbruch, insbesondere der Lichtwellenführung des Lichtleiters in den Führungsdurchbruch, möglich ist.

Derartige Vorpositionierelemente können in unterschiedlichster Art und Weise ausgebildet sein. Beispielsweise wäre es denkbar, daß die Vorpositionierelemente einseitige Anlageflächen für einen Lichtleiter darstellen.

Besonders günstig ist es jedoch, wenn die Vorpositionierelemente den Lichtleiter relativ zum Positionierdurchbruch im Positionierelement vorpositionierende Vorpositionierdurchbrüche aufweisen, so daß durch die Vorpositionierdurchbrüche eine allseitige Vorpositionierung der Lichtleiter erfolgt.

Eine besonders günstige Vorpositionierung ist dann möglich, wenn die Vorpositionierdurchbrüche einen sich in Richtung der Positionierdurchbrüche verkleinernden Querschnitt aufweisen, und somit durch eine Art "Trichterwirkung" dazu beitragen, daß der Lichtleiter möglichst einfach in den Positionierdurchbruch einführbar ist.

Besonders günstig läßt sich eine derartige Vorpositionierungswirkung dann realisieren, wenn ausgehend von dem jeweiligen Positionierdurchbruch aufeinanderfolgende Vorpositionierdurchbrüche aufeinanderfolgender Vorpositionierelemente von Vorpositionierelement zu Vorpositionierelement einen größeren Querschnitt aufweisen und somit insbesondere durch eine Vielzahl von Vorpositionierelementen eine sich zunehmend in Richtung des Positionierelements verbessernde Vorpositionierung erzielbar ist.

Beim Vorsehen einer Mehrzahl von Vorpositionierelementen, insbesondere solchen, die mit zunehmendem Abstand vom Positionierelement einen immer größer werdenden Querschnitt der vorpositionierten Durchbrüche aufweisen, ist, um die Zahl der präzise herzustellenden Vorpositionierelemente zu verringern, jedoch die "Trichterwirkung" in einer Einführrichtung zu vergrößern, auch vorzugsweise vorgesehen, daß zwischen den Vorpositionierelementen Distanzelemente vorgesehen sind, die aufeinanderfolgenden Vorpositionierdurchbrüche jedoch so ausgebildet sind, daß deren Querschnitte insgesamt einen möglichst stufenlosen "Trichter" bilden.

Die Wirkung derartiger Vorpositionierelemente ist insbesondere dann von besonderem Vorteil, wenn die Vorpositionierelemente auf die Lichtwellenführung der Lichtleiter wirken, da die Lichtwellenführung der Lichtleiter sehr dünn ist und somit möglichst schonend in den Positionierdurchbruch des Positionierelements eingeführt werden sollte.

Um insbesondere dann, wenn die Lichtwellenführung durch das Positionierelement möglichst präzise positioniert werden soll, eine gute Positionierung des Lichtleiters zu erhalten, ist vorzugsweise vorgesehen, daß auf einer der Ausrichtfläche gegenüberliegenden Seite des Positionierelements mindestens ein Halteelement vorgesehen ist, welches die Lichtleiter aufnehmende Haltedurchbrüche aufweist, da damit noch die Möglichkeit besteht, den Lichtleiter nicht nur über die Lichtwellenführung zu fixieren, sondern zusätzlichen Halt über Haltedurchbrüche und den Schutzmantel zu geben und insbesondere eine Abstützung des Schutzmantels in Richtung quer zu der Ausrichtfläche zu erreichen.

Um auch noch die Lichtleiter gegen Zugkräfte zu sichern, ist vorzugsweise vorgesehen, daß auf einer der Ausrichtfläche gegenüberliegenden Seite des Positionierelements ein Fixierelement vorgesehen ist, an welchem die Lichtleiter vorzugsweise schutzmantelseitig fixierbar sind.

Eine konstruktiv besonders einfache Lösung sieht vor, daß das Fixierelement Durchbrüche für die Lichtleiter aufweist, in welchen diese sich gut fixieren lassen.

Eine besonders vorteilhafte Möglichkeit der Fixierung der Lichtleiter sieht vor, daß diese an dem Fixierelement durch Fügen fixierbar sind.

Eine derartige Fügeverbindung zwischen dem Fixierelement und den Lichtleitern erfolgt vorzugsweise durch eine Fügemasse, welche beispielsweise eine Klebe- oder Lötmasse oder eine ähnliche Masse sein kann, welche es ermöglicht, das Fixierelement fest mit den Lichtleitern zu verbinden.

Prinzipiell wäre es denkbar, sowohl das Anlageelement als auch das Positionierelement, gegebenenfalls die Vorpositionierelemente, gegebenenfalls die Halteelemente und gegebenenfalls das Fixierelement über ein Gehäuse relativ zueinander definiert zu positionieren und dadurch eine feste Verbindung zwischen diesen zu schaffen.

Aus Gründen einer hohen Präzision bei der Positionierung der Lichtleiter ist es jedoch besonders vorteilhaft, wenn das Positionierelement und das Anlageelement miteinander zu einer Positioniereinheit verbunden sind.

Besonders vorteilhaft ist es, wenn das Positionierelement auf dem Anlageelement aufliegt.

Eine besonders gute relative Positionierung zwischen Anlageelement und Positionierelement ist dadurch erreichbar, daß das Anlageelement und das Positionierelement formschlüssig miteinander verbunden sind.

Noch vorteilhafter ist es, wenn die Positioniereinheit zusätzlich zu dem Anlageelement und dem Positionierelement auch noch die Vorpositionierelemente umfaßt, so daß auch diese durch direkte Verbindung exakt zu dem Positionierelement angeordnet werden können.

Ferner hat es sich auch als vorteilhaft erwiesen, wenn die Positioniereinheit auch die Halteelemente umfaßt, so daß auch diese exakt zum Positionierelement und zu den Vorpositionierelementen ausgerichtet sind.

Besonders günstig ist es, wenn die Positioniereinheit auch das Fixierelement umfaßt, so daß auch die feste Verbindung zwischen den Lichtleitern und dem Fixierelement mit hoher Präzision relativ zu dem Positionierelement erfolgt und somit sichergestellt ist, daß die Endflächen der Lichtleiter stets an den Anlageflächen des Anlageelements anliegen und somit in ihrer definierten geometrischen Fläche verbleiben.

Dabei ist es besonders günstig, wenn auch die Vorpositionierelemente formschlüssig mit dem Positionierelement verbunden sind.

Ferner ist es günstig, wenn die Halteelemente formschlüssig mit dem Positionierelement verbunden sind.

Schließlich ist es von Vorteil, wenn auch das Fixierelement formschlüssig mit dem Positionierelement verbunden ist.

Eine besondere einfache Möglichkeit, derartige formschlüssige Verbindungen zu realisieren, ist dann gegeben, wenn das Positionierelement und die mit diesem formschlüssig verbundenen Elemente Passungsdurchbrüche aufweisen und durch einen die Passungsdurchbrüche durchsetzenden Passungsstift verbunden sind.

Hinsichtlich der Art des Aufbaus der einzelnen Elemente wurden bislang keine näheren Angaben gemacht. So könnten die Positionierelemente, die Vorpositionierelemente, die Halteelemente und das Fixierelement nach unterschiedlichen Konzepten aufgebaut sein. Besonders günstig ist es jedoch, wenn die Vorpositionierelemente und/oder die Halteelemente und/oder das Fixierelement als plattenförmige Teile ausgebildet sind.

In diesem Fall läßt sich die Positioniereinheit besonders einfach aus einem Stapel derartiger plattenförmiger Teile herstellen.

Im Fall der Ausführung sämtlicher Elemente aus plattenförmigen Teilen ist auch die Herstellung derselben besonders vorteilhaft realisierbar, nämlich dadurch, daß die jeweiligen Durchbrüche in den plattenförmigen Teilen durch Lithographie und Tiefenätzen oder Laserbearbeitung und Tiefenätzen oder Laserbearbeitung herstellbar sind, beides sind Herstellungsmethoden, die bei kleinen Abmessungen eine hohe Präzision, insbesondere eine Präzision von weniger als 1 µm zulassen.

Die Fixierung der Endflächen relativ zu der Positioniereinheit kann alternativ oder ergänzend zur Fixierung über das Anlageelement dergestalt erfolgen, daß die Fixierung eine Fügeverbindung zwischen den Lichtleitern und der Positioniereinheit umfaßt. Eine derartige Fügeverbindung kann grundsätzlich in jedem Element der Positioniereinheit wirksam sein.

So sieht eine vorteilhafte Lösung vor, daß die Fixierung eine Fügeverbindung zwischen den Lichtleitern und dem Positionierelement umfaßt, d.h. daß die Fügeverbindung unmittelbar zwischen den Lichtleitern und dem Positionierelement wirksam ist und somit im Bereich des Positionierelements die exakte Fixierung der Lichtleiter sowohl in Richtung der geometrischen Ausrichtfläche als auch quer zu dieser erfolgt.

Besonders günstig ist es, wenn die Fixierung eine Fügeverbindung zwischen der Lichtwellenführung und der Positioniereinheit umfaßt, da damit eine unmittelbare Einwirkung auf die Lichtwellenführung selbst möglich ist und diese exakt positioniert ist und nicht nur über den Schutzmantel als Verbindungsmittel zwischen den beiden, so daß jegliche Art von Ungenauigkeiten oder unpräziser Führung aufgrund der Wirkung des Schutzmantels vermieden wird.

Um eine besonders gute Fixierung der Lichtleiter zu erhalten, ist vorzugsweise vorgesehen, daß die Fixierung die Fügeverbindung zwischen den Lichtleitern und dem Fixierelement umfaßt, da insbesondere im Bereich des Fixierelements eine feste Verbindung zwischen dem Schutzmantel der Lichtleiter und dem Positionierelement realisierbar ist.

Ferner wurde im Rahmen der bisherigen Ausführungsbeispiele davon ausgegangen, daß die Endflächen entweder frei sind und der Lichtstrahl jeweils aus den Endflächen ungehindert austritt oder durch das Anlageelement hindurchtritt. Insbesondere beim Verwenden des Anlageelements kann es zu Reflexionen beim Übergang des Lichtstrahls von der Endfläche des Lichtleiters in das Anlageelement kommen. Aus diesem Grund ist vorzugsweise zwischen den Endflächen und den Anlageflächen ein brechungsindexadaptierendes Medium vorgesehen.

Um ein erfindungsgemäßes Kopfteil, umfassend eine Positioniereinheit und in dieser fixierte Lichtleiter, als mit üblichen mikroskopischen Vorrichtungen handhabbares Element auszubilden, ist vorzugsweise vorgesehen, daß die Positioniereinheit in einem Gehäuse fixiert ist, welches dann seinerseits die einfache Handhabbarkeit des Kopfteils sicherstellt.

Für die Fixierung der Positioniereinheit an dem Gehäuse sind unterschiedliche Möglichkeiten denkbar. Besonders günstig ist es, wenn die Fixierung zwischen der Positioniereinheit und dem Gehäuse durch eine Präzisionsfläche der Positioniereinheit und eine Präzisionsfläche des Gehäuses erfolgt. Vorzugsweise ist als Präzisionsfläche der Positioniereinheit die Ausrichtfläche vorgesehen, mit welcher die Positioniereinheit auf einer entsprechend präzise gearbeiteten Fläche, beispielsweise einer ebenfalls präzise gearbeiteten Auflagefläche des Gehäuses, aufliegt.

Vorzugsweise erfolgt eine derartige Fixierung der Positioniereinheit in dem Gehäuse ebenfalls über entsprechend ausgebildete Formschlußelemente.

Weitere Merkmale und Vorteile der Erfindung sind Gegenstand der nachfolgenden Beschreibung sowie der zeichnerischen Darstellung einiger Ausführungsbeispiele. In der Zeichnung zeigen:
- Fig. 1: einen Schnitt durch ein erstes Ausführungsbeispiel eines erfindungsgemäßen Kopfteils;
- Fig. 2: eine Draufsicht auf einen Positionierdurchbruch im Positionierelement;
- Fig. 3 mit Fig. 3A, 3B und 3C: eine abschnittsweise Darstellung eines Zusammenbaus eines erfindungsgemäßen Kopfteils;
- Fig. 4: eine Draufsicht auf einen Führungsdurchbruch zur relativen Ausrichtung der Elemente der Positioniereinheit beim ersten Ausführungsbeispiel;
- Fig. 5: eine Draufsicht auf eine Variante eines derartigen Führungsdurchbruchs;
- Fig. 6: eine Darstellung eines Übergangs zwischen einer Endfläche einer Lichtwellenführung und dem Anlageelement bei einer Variante des ersten Ausführungsbeispiels;
- Fig. 7: eine Darstellung des Übergangs zwischen der Endfläche und dem Anlageelement bei einer weiteren Variante des ersten Ausführungsbeispiels;
- Fig. 8: eine Darstellung einer Trichterwirkung von Vorpositionierelementen bei einer weiteren Variante des ersten Ausführungsbeispiels;
- Fig. 9: eine Darstellung der Trichterwirkung der Variante gemäß Fig. 8 in modifizierter Form;
- Fig. 10: eine Darstellung der Wirkung von Vorpositionierelementen bei einer weiteren Variante des ersten Ausführungsbeispiels;
- Fig. 11: eine modifizierte Variante der in Fig. 10 dargestellten Variante des ersten Ausführungsbeispiels;
- Fig. 12: ein zweites Ausführungsbeispiel eines erfindungsgemäßen Kopfteils;
- Fig. 13: eine Einsatzmöglichkeit des zweiten Ausführungsbeispiels des erfindungsgemäßen Kopfteils als Steckverbindung für Lichtleiter;
- Fig. 14: ein drittes Ausführungsbeispiel der Einsatzmöglichkeit des erfindungsgemäßen Kopfteils als Kopfteil für Mikrobearbeitung oder Oberflächenmodifikation;
- Fig. 15: einen Schnitt ähnlich Fig. 14 durch ein viertes Ausführungsbeispiel für die Einsatzmöglichkeit eines erfindungsgemäßen Kopfteils für Mikrobearbeitung oder Oberflächenmodifikation und
- Fig. 16: ein fünftes Ausführungsbeispiel eines erfindungsgemäßen Kopfteils zum Einsatz desselben für die Bearbeitung oder Oberflächenmodifikation bei Nanostrukturen, insbesondere zum Einsatz bei der Herstellung von Strukturen in der Halbleitertechnik.

Ein Ausführungsbeispiel eines erfindungsgemäßen Kopfteils zur Erzeugung mehrerer, sich im wesentlichen in einer Richtung und vorzugsweise parallel zueinander ausbreitender und in definiertem Abstand voneinander angeordneter Lichtstrahlen 10, welche aus Endflächen 12 von Lichtwellenführungen 14 von Lichtleitern 16 austreten, umfaßt ein plattenförmiges Anlageelement 20, welches aus für das Licht der Lichtstrahlen 10 durchlässigem Material, beispielsweise einem geeigneten Glas, Saphir o.ä, hergestellt ist.

Das Anlageelement 20 erstreckt sich quer zur Summe aller Lichtstrahlen 10 und bildet auf einer den Lichtleitern 16 zugewandten Seite einzelne Anlageflächen 22, gegen welche die Endflächen 12 der Lichtwellenführungen 14 der Lichtleiter 16 anlegbar sind. Vorzugsweise liegen sämtliche Anlageflächen 22 in einer geometrischen Ausrichtfläche 24, welche im einfachsten Fall eine Ebene darstellt. Die Positionierung der einzelnen Anlageflächen 22 in der gemeinsamen definierten Ausrichtfläche 24 erfolgt vorzugsweise dadurch, daß das Anlageelement 20 eine den Lichtleitern 16 zugewandte Oberfläche 26 aufweist, die mit der geometrischen Fläche 24 zusammenfällt und deren einzelne Teilbereiche dann die Anlageflächen 22 für die Endflächen 12 der Lichtwellenführungen 14 bilden.

Durch die einzelnen Anlageflächen 22 sind somit die Endflächen 12 aller Lichtleiter 16, aus denen die Lichtstrahlen 10 austreten sollen, definiert in der gewünschten geometrischen Fläche 24 positionierbar.

Zur definierten Positionierung der Endflächen 12 relativ zueinander, insbesondere in einem definierten Flächenmuster mit vorgegebenen Abständen, umfaßt das erfindungsgemäße Kopfteil ein plattenförmiges Positionierelement 30, welches auf der den Lichtleitern 16 zugewandten Seite des Anlageelements 20 angeordnet ist.

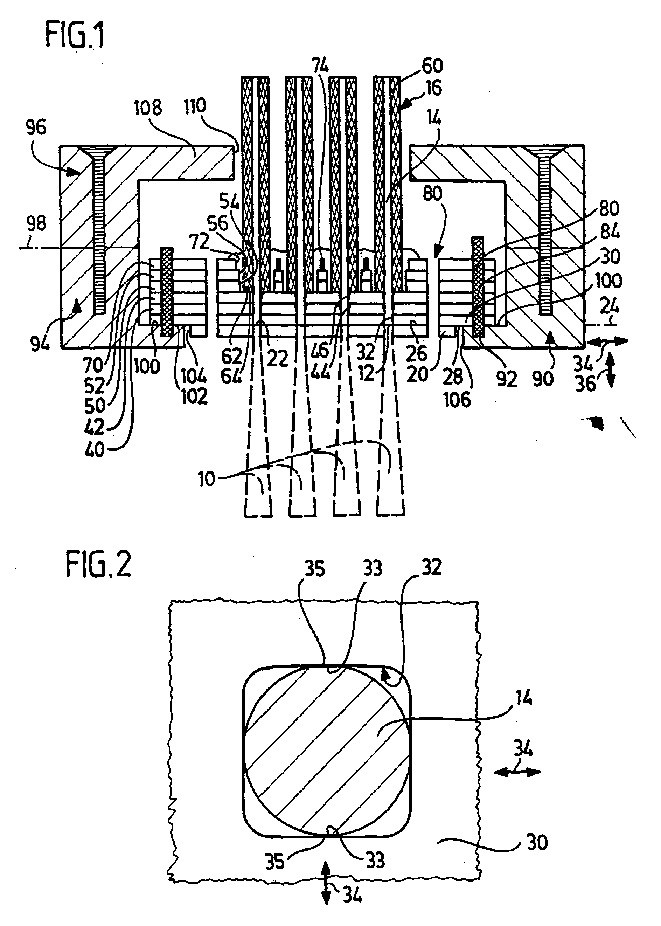

Das Positionierelement 30 erstreckt sich im wesentlichen parallel zu dem Anlageelement 20 und weist eine Vielzahl von Positionierdurchbrüchen 32 auf, wobei jeder der Positionierdurchbrüche 32 von einer bis zu der entsprechenden Anlagefläche 22 geführten Lichtwellenführung 14 eines der Lichtleiter 16 durchsetzt ist und jeder Positionierdurchbruch 32 einen Positionierflächen 33 aufweisenden Querschnitt aufweist, welche entsprechend dem Querschnitt der Lichtwellenführung 14 angeordnet sind und in Umfangsflächenbereichen 35 der Lichtwellenführung 14 anliegen, so daß die Lichtwellenführung 14 hierdurch in dem Positionierdurchbruch 32 exakt in allen parallel zur geometrischen Fläche 24 verlaufenden Richtungen 34 positioniert ist (Fig. 2).

Ferner erfolgt eine exakte Positionierung des Anlageelements 20 relativ zu dem Positionierelement 30 dadurch, daß das Anlageelement 20 mit seiner Oberfläche 26 auf der in der Ausrichtfläche 24 liegenden Oberfläche 28 des Positionierelements 30 aufliegt, so daß durch die Positioniereinheit 80 aus Anlageelement 20 und Positionierelement 30 die Endfläche 12 jeder Lichtwellenführung 14 eines der Lichtleiter 16 einerseits in einer Richtung 36 senkrecht zur geometrischen Fläche 24 durch die Anlagefläche 22 exakt positioniert ist und andererseits in den Richtungen 34 parallel zur geometrischen Fläche 24 durch den jeweiligen Positionierdurchbruch 32 exakt positioniert ist, wobei die Positionierdurchbrüche 32 so angeordnet sind, daß sie die jeweilige Lichtwellenführung 14 auf die für diesen vorgesehene Anlagefläche 22 hin führen und an dieser halten.

Vorzugsweise sind das Anlageelement 20 und das Positionierelement 30 fest miteinander verbunden, wobei im einfachsten Fall das Positionierelement 30 die dem Anlageelement 20 zugewandte präzise polierte Oberfläche 28 aufweist, an welcher das Anlageelement 20 seinerseits mit seiner polierten Oberfläche 26 anliegt, so daß beide unmittelbar aufeinander aufliegen.

Vorzugsweise erfolgt eine definierte Fixierung derselben gegen eine Bewegung parallel zu einer der Richtungen 34 entweder durch ein beide durchsetzendes Formschlußelement, beispielsweise einen Paßstift, oder mittels einer bekannten Bondtechnik, im Fall der Herstellung des Positionierelements 30 aus Silizium und Glas, mittels einer bekannten Glas-SI-Bondtechnik.

Um die Lichtwellenführungen 14 ohne Beschädigung der Endflächen 12 in die Positionierdurchbrüche 32 einführen zu können, sind auf einer dem Anlageelement 20 gegenüberliegenden Seite des Positionierelements 30 mehrere Vorpositionierelemente 40, 42 vorgesehen, welche ebenfalls im einfachsten Fall plattenförmig ausgebildet sind und Vorpositionierdurchbrüche 44, 46 aufweisen, die fluchtend mit den Positionierdurchbrüchen 32 angeordnet sind, allerdings einen größeren Querschnitt als diese aufweisen.

Ferner ist vorgesehen, daß jeder sich unmittelbar an den Positionierdurchbruch 32 anschließende Vorpositionierdurchbruch 44 einen größeren Querschnitt als der Positionierdurchbruch 32 aufweist und der an den Vorpositionierdurchbruch 44 anschließende Vorpositionierdurchbruch 46 des Vorpositionierelements 42 einen noch größeren Querschnitt aufweist als der Vorpositionierdurchbruch 44, so daß die Vorpositionierdurchbrüche 46, 44 aufgrund der sich verengenden Querschnitte eine "Trichterwirkung" auf die Lichtwellenführung 14 zum Einführen in den Positionierdurchbruch 32 ausüben.

Gleichzeitig erhält die Lichtwellenführung 14 aufgrund der größeren Toleranzen in den Vorpositionierdurchbrüchen 44 und 46 einen zusätzlichen Freiheitsgrad bei der Ausrichtung des gesamten Lichtleiters 16 relativ zum Positionierdurchbruch 32, obwohl die Lichtwellenführung 14 unmittelbar nahe der Endfläche 12 durch den Positionierdurchbruch 32 exakt positioniert ist.

Um ferner eine feste Verbindung zwischen dem Lichtleiter und dem Positionierelement 30 herzustellen, sind auf einer dem Positionierelement 30 gegenüberliegenden Seite der Vorpositionierelemente 40, 42 zusätzliche Halteelemente 50, 52 vorgesehen, welche ebenfalls plattenförmig ausgebildet sind und Haltedurchbrüche 54, 56 aufweisen, die so dimensioniert sind, daß ein Schutzmantel 60 des Lichtleiters in diese einführbar ist.

Somit erstreckt sich der Schutzmantel 60 des Lichtleiters 16 durch die Haltedurchbrüche 54 und 56 der Halteelemente 50, 52 hindurch bis zu den Vorpositionierelementen 40, 42 und sitzt beispielsweise mit einer Stirnseite 62 auf einer den jeweiligen Vorpositionierdurchbruch 46 umgebenden Oberfläche 64 des Vorpositionierelements 42 auf.

Durch die Haltedurchbrüche 54 und 56 der Halteelemente 50 und 52 besteht somit die Möglichkeit, die Lichtleiter 16 zusätzlich über die auf den Schutzmantel 60 wirkenden Haltedurchbrüche 54, 56 in den Richtungen 34 zu fixieren und somit mechanische Belastungen, die auf die Lichtwellenführung 14 aufgrund seiner Fixierung in dem Positionierdurchbruch 32 wirken, erheblich zu verringern.

Vorzugsweise ist auf einer dem Positionierelement 30 gegenüberliegenden Seite des obersten Halteelements 52 noch ein Fixierelement 70 aufgelegt, welches Durchbrüche 72 für den Schutzmantel 60 des jeweiligen Lichtleiters 16 aufweist, wobei die Durchbrüche 72 noch einen größeren Querschnitt aufweisen als die Haltedurchbrüche 54, 56 für den Schutzmantel 60. Zur Fixierung der Lichtleiter 16 ist beispielsweise eine feste Verbindung zwischen dem Schutzmantel 60 und dem Fixierelement, insbesondere dem Schutzmantel 60 und dem Fixierelement 70 im Bereich des Durchbruchs 72, dadurch herstellbar, daß zwischen diesen eine Fügemasse 74 wirksam ist, welche beispielsweise eine Klebemasse oder ein Lot sein kann und eine Fügeverbindung zwischen dem Schutzmantel 60 des jeweiligen Lichtleiters 16 und dem Fixierelement 70, insbesondere im Bereich des Durchbruchs 72, herstellt.

Besonders vorteilhaft ist es, wenn sich die Fügemasse nicht nur im Bereich des Fixierelements 70 zwischen den Lichtleitern 16 und dem Fixierelement 70 erstreckt und diese miteinander verbindet, sondern sich in die Haltedurchbrüche 54 und 56, die Vorpositionierdurchbrüche 44 und 46 und sogar in die Positionierdurchbrüche 32 erstreckt, um in all diesen entweder den Schutzmantel 60 des Lichtleiters 16 oder die Lichtwellenführung 14 desselben mit dem jeweiligen Durchbruch zu verbinden. Besonders günstig ist es, wenn die Fügemasse sich auch noch zwischen den Endflächen 12 und den Anlageflächen 22 erstreckt, und derart ausgebildet ist, daß sich eine Brechungsindexadaption zwischen der Lichtwellenführung 14 und dem Material des Anlageelements 20 ergibt.

Wie bereits erläutert, sind vorzugsweise das Anlageelement 20 und das Positionierelement 30 fest miteinander verbunden und liegen mit ihren Oberflächen 26 und 28 aufeinander auf.

Eine feste mechanische Verbindung zwischen den Vorpositionierelementen 40, 42, den Halteelementen 50, 52 und dem Fixierelement 70 wurde nicht im einzelnen erläutert.

Diese läßt sich am einfachsten dadurch herstellen, daß das Vorpositionierelement 40 unmittelbar auf dem Positionierelement 30 aufliegt und das Vorpositionierelement 42 unmittelbar auf dem Vorpositionierelement 40. Dann folgt das unmittelbar auf dem Vorpositionierelement 42 aufliegende Halteelement 50, und auf diesem liegt unmittelbar das Halteelement 52 auf, und schließlich liegt unmittelbar auf dem Halteelement 52 das Fixierelement 70 auf, so daß insgesamt das Positionierelement 30 mit den Vorpositionierelementen 40, 42, den Halteelementen 50, 52 und dem Fixierelement 70 die Positioniereinheit in Form eines Stapels 80 aus plattenförmigen Elementen bildet, die jeweils mit den einander zugewandten Oberflächen unmittelbar aufeinander aufliegen.

In einem derartigen Stapel der aufeinander aufliegenden Elemente sind diese vorzugsweise gegen eine Relativbewegung entweder durch eine Fügeverbindung unmittelbar miteinander verbunden oder durch eines oder mehrere Formschlußelemente 82, beispielsweise in Form zylindrischer Stifte, welche entsprechende, beispielsweise als zylindrische Ausnehmungen 84 ausgebildete Formschlußelemente in dem Positionierelement 30, den Vorpositionierelementen 40, 42, den Halteelementen 50, 52 und dem Fixierelement 70 durchsetzen. Gleichzeitig dient der Stift 82 noch dazu, den gesamten Stapel 80 relativ zu einem Gehäuse 90 für das Kopfteil zu fixieren, dadurch, daß der Stift 82 seinerseits in einer entsprechenden Halteausnehmung 92 in dem Gehäuse 90 fixiert ist.

Vorzugsweise weist das Gehäuse 90 ein Unterteil 94 und ein Oberteil 96 auf, die durch eine Trennebene 98 voneinander trennbar sind. Das Unterteil 94 ist dabei seinerseits mit einem Tragflansch 100 versehen, auf welchem der Stapel 80 mit einem äußeren Randbereich 102 ruht, welcher über einen Außenrand 104 des Anlageelements 20 übersteht. Ferner umgibt der Tragflansch 100 eine Öffnung 106, in welcher das Anlageelement 20 angeordnet ist.

Das Oberteil 96 weist seinerseits noch einen Deckel 108 auf, welcher eine Öffnung 110 aufweist, durch welche die Lichtleiter 16, die zu dem Stapel 80 geführt sind, hindurch verlaufen.

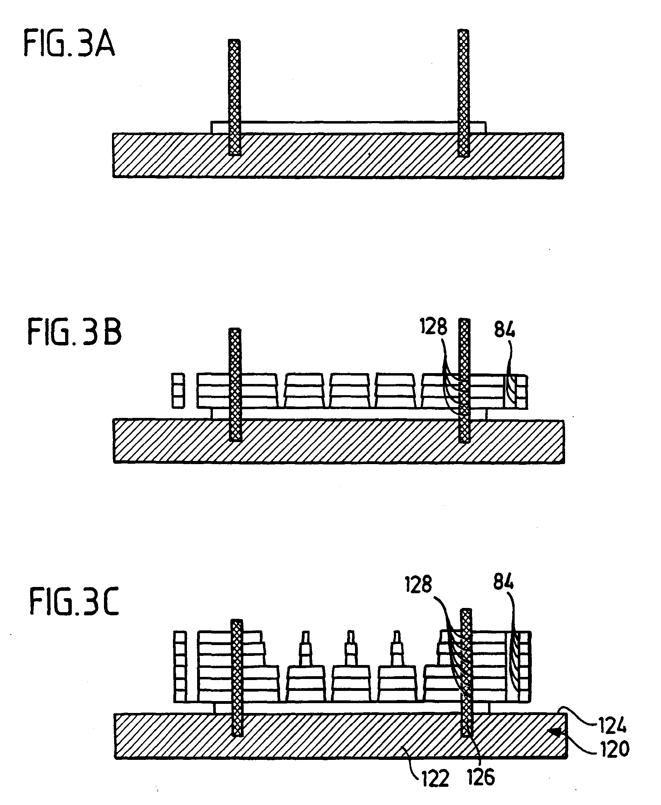

Das Herstellen des Stapels 80 erfolgt, wie in Fig. 3A bis 3C dargestellt, durch eine Stapelhilfe 120, welche eine Grundplatte 122 mit einer Stapelfläche 124 und von der Grundplatte 122 senkrecht zur Stapelfläche 124 verlaufende Führungsstifte 126 aufweist.

Sowohl das Anlageelement 20 als auch das Positionierelement 30, die Vorpositionierelemente 40, 42, die Halteelemente 50, 52 und das Fixierelement 70 sind mit Führungsdurchbrüchen 128 versehen, so daß durch Einführen der Führungsstifte 126 in die Führungsdurchbrüche 128 beim Aufeinanderstapeln des Anlageelements 20, des Positionierelements 30, der Vorpositionierelemente 40, 42, der Halteelemente 50, 52 und des Fixierelements 70 durch die Stapelhilfe 120 zwangsläufig eine präzise und definierte Ausrichtung derselben relativ zueinander erreichbar ist, wie in Fig. 3C dargestellt. Aufgrund der definierten Ausrichtung ergibt sich auch zwangsläufig eine definierte Ausrichtung der Positionierdurchbrüche 32 relativ zu den Anlageflächen 22, der Vorpositionierdurchbrüche 44, 46 relativ zu dem Positionierdurchbruch 32, der Haltedurchbrüche 54, 56 relativ zu den Vorpositionierdurchbrüchen 44, 46 und des Durchbruchs 72 relativ zu den Haltedurchbrüchen 54, 56.

Sämtliche Elemente 30, 40, 42, 50, 52 und 70 des Stapels 80 lassen sich prinzipiell aufgrund der definierten Ausrichtung in der Stapelhilfe 120 fest miteinander durch beliebige Arten von Verbindungs- oder Fügetechnik miteinander verbinden.

Gleichzeitig schafft die Stapelhilfe 120 die Möglichkeit, den Stapel 80 exakt für das Einführen der Lichtwellenführung 14 in die Vorpositionierdurchbrüche 44, 46 und den Positionierdurchbruch 32 zu positionieren und somit die Lichtleiter 16 mit der gewünschten definierten Positionierung der Endflächen 12 mit dem Stapel 80 zu verbinden.

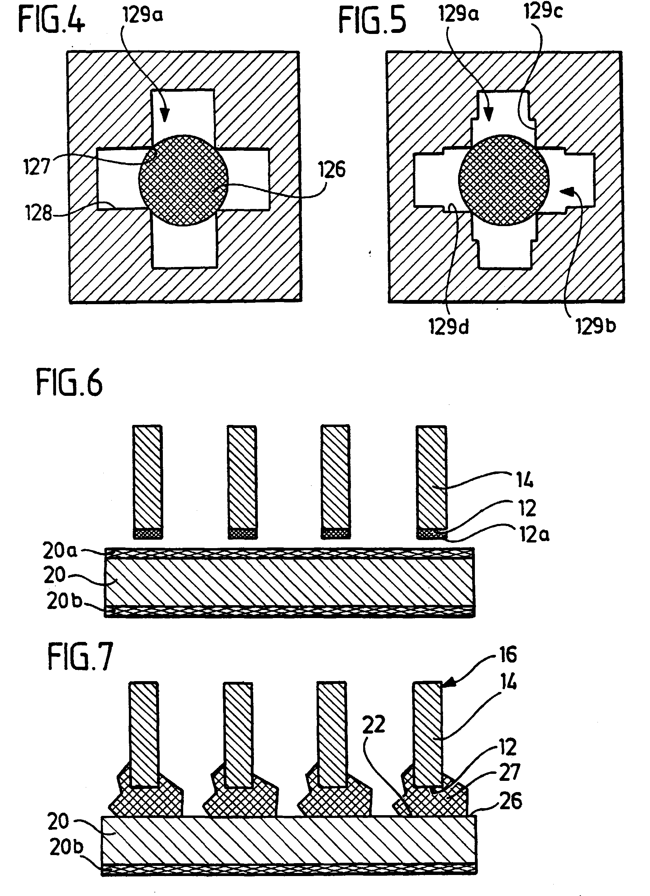

Die Führungsdurchbrüche 128 sind, wie beispielsweise in Fig. 4 dargestellt, vorzugsweise so ausgeführt, daß sie in Richtung des Führungsstifts 126 vorstehende Spitzen 127 aufweisen, die beispielsweise durch einander kreuzende langgezogene Ausnehmungen 129a und 129b um den Kreuzungsbereich derselben herum erhältlich sind.

Derartige Führungsdurchbrüche 128 lassen sich aber nicht nur zum Relativpositionieren der einzelnen Elemente mittels der Führungsstifte 126 einsetzen, sondern auch dazu, entsprechend der zur Justage von Wavern in Waverbondanlagen üblichen Techniken eine optische Justierung der einzelnen Elemente zueinander ohne Führungsstift 126 durchzuführen. Besonders günstig ist es, die Führungsdurchbrüche 128, so wie in Fig. 5 auszubilden, und insbesondere die lang gezogenen Ausnehmungen 129a und 129b jeweils mit seitlichen Einbuchtungen 129c und 129d auszuführen, die eine optische Justage ähnlich der in Waverbondanlagen mit hoher Präzision erlauben, so daß die Stapelhilfe 120 vorzugsweise lediglich zur Herstellung von Kleinserien und Mustern besonders günstig sein wird.

Die Herstellung des Positionierelements 30 mit den Positionierdurchbrüchen 32, der Vorpositionierelemente 40, 42 mit den Vorpositionierdurchbrüchen 44, 46, der Halteelemente 50, 52 mit den Haltedurchbrüchen 54, 56 erfolgt vorzugsweise durch Lithographie oder durch SI-Tiefenätzen, Herstellungstechniken, die Querschnittsflächen der Durchbrüche und die Positionierung der Durchbrüche relativ zueinander mit Toleranzen weit unterhalb eines Mikrometers herzustellen. In gleicher Weise erfolgt auch die Herstellung der Führungsdurchbrüche 128, so daß gleichzeitig gewährleistet ist, daß auch sämtliche Elemente in der Stapelhilfe 120 oder mit Waverbondtechniken mit der gleich großen Präzision übereinander gestapelt werden können.

Bei einer Variante des ersten Ausführungsbeispiels ist, wie in Fig. 6 dargestellt, die jeweilige Endfläche 12 der Lichtwellenführung 14 mit einer Anti-Reflexbeschichtung 12a versehen, um Reflexionen zu verhindern. Gleichzeitig ist das Anlageelement 20 beiderseits mit Anti-Reflexbeschichtungen 20a und 20b versehen.

Um die einander zugewandten Anti-Reflexbeschichtungen 12a und 20a vermeiden zu können, ist vorzugsweise bei einer weiteren Variante, dargestellt in Fig. 7, vorgesehen, daß zwischen den Endflächen 12 und der Oberfläche 26 des Anlageelements 20 ein brechungsadaptierendes Medium 27 wirksam ist, welches für eine Anpassung des Brechungsindex der Lichtwellenführung 14 des Lichtleiters 16 und des Materials des Anlageelements 20 sorgt. Dieses brechungsindexadaptierende Medium 27 kann entweder ein separates Medium sein oder es kann sich bei diesem auch um die Fügemasse 74 handeln, die gleichzeitig zum Fixieren des Lichtleiters in den einzelnen Elementen der Positioniereinheit 80 dient.

Bei einer weiteren Variante des ersten Ausführungsbeispiels ist eine Vielzahl von Vorpositionierelementen 40'a - 40'f vorgesehen, die stufenförmig ausgeführte Vorpositionierdurchbrüche 44'a - 44'f aufweisen, so daß sich insgesamt ein gestufter Trichter zur Vorpositionierung beispielsweise der Lichtwellenführung 14 ergibt, wenn dieser in einer Einführrichtung 45 in die Vorpositionierdurchbrüche 44'a - 44'f eingeführt wird.

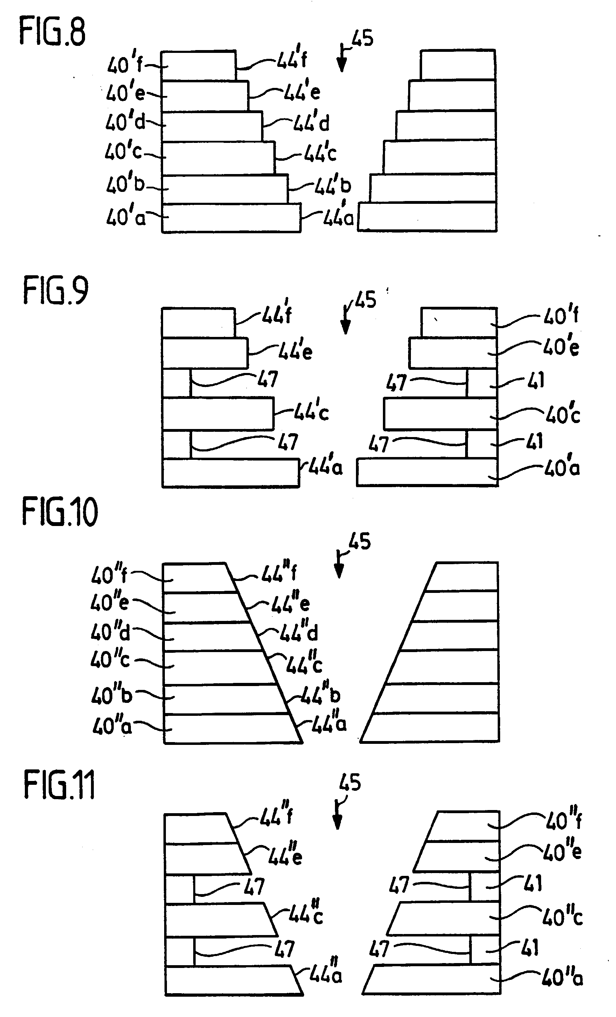

Bei einer weiteren, in Fig. 9 dargestellten Variante, läßt sich die Zahl der präzise herzustellenden Vorpositionierdurchbrüche dadurch reduzieren, daß die Vorpositionierelemente 40'b und 40'd durch Distanzelemente 41 ersetzt werden, deren Durchbrüche 47' größer als die Vorpositionierdurchbrüche 44' ausgebildet sind, so daß die Trichterwirkung lediglich beispielsweise durch die Vorpositionierelemente 44'f, 44'e, 44'c und 44'k erreicht wird. Damit ist trotz großer und sich lang in der Einführrichtung 45 erstreckenden Trichterwirkung eine einfache Art des Aufbaus mit weniger präzise auszuführenden Vorpositionierdurchbrüchen erhältlich.

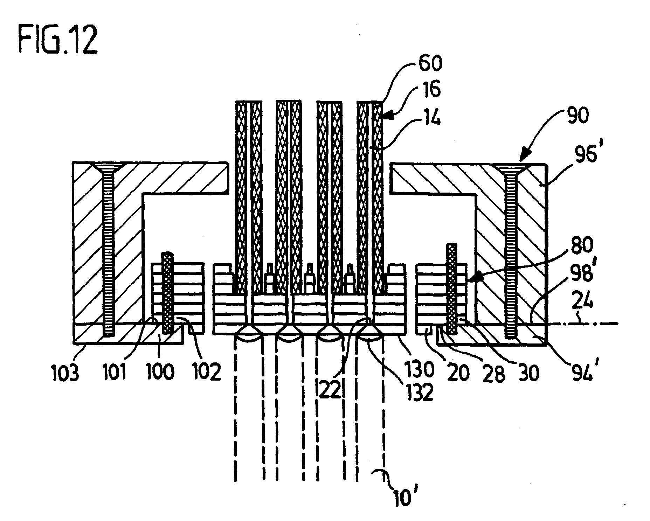

Noch vorteilhafter ist eine weitere, in Fig. 10 dargestellte Variante der Vorpositionierelemente 40''a bis 40''f bei welcher jeder der einzelnen Vorpositionierdurchbrüche konisch in der Einführrichtung 45 der Lichtwellenführung ausgeführt ist und somit insgesamt die aufeinanderliegenden Vorpositionierelemente 40''a bis 40''f einen im wesentlichen kontinuierlichen "Trichterverlauf" ergeben.

Um ebenfalls bei dieser Art der Ausführung die präzise auszuführenden Positionierdurchbrüche hinsichtlich ihrer Zahl zu verringern, sind bei einer weiteren in Fig. 11 dargestellten Variante ebenfalls die Vorpositionierelemente 40''b und 40''d durch Distanzelemente 41 ersetzt, deren Durchbrüche 47 in gleicher Weise wie bei der in Fig. 9 dargestellten Variante ausgebildet sind, so daß lediglich noch die in sich ebenfalls in der Einführrichtung 45 verlaufenden Vorpositionierdurchbrüche 44''a, 44''c, 44''e und 44''f die Trichterwirkung, allerdings mit Lücken, entfalten.

Bei einem zweiten Ausführungsbeispiel eines erfindungsgemäßen Kopfteils, dargestellt in Fig. 12, ist das Anlageelement 20' nicht nur als plattenförmiges Teil mit der Oberfläche 26 und einer zu dieser planparallelen unteren Fläche 28 hergestellt, sondern die untere Fläche 130 weist auf den Anlageflächen 22 gegenüberliegenden Seiten Mikrolinsen 132 auf, die im einfachsten Fall einstückig an das Anlageelement 20 angeformt sind oder auch durch einen separaten Herstellungsprozeß jeweils zentriert zu den Anlageflächen 22 auf die untere Fläche 130 aufgesetzt sind. Diese Mikrolinsen 132 erlauben es, die aus den Endflächen 12 austretenden Lichtstrahlen so zu formen, daß sich beispielsweise in Fortsetzung der Mikrolinsen 132 auf einer dem Positionierelement 30 gegenüberliegenden Seite die Lichtstrahlen nicht mehr als divergente Lichtstrahlen 10, sondern als kollimierte Lichtstrahlen 10' ausbreiten.

Besonders günstig ist es, wenn in diesem Fall die Trennebene 98' zwischen dem Unterteil 94' und dem Oberteil 96' des Gehäuses 90 mit der geometrischen Ausrichtfläche 24 zusammenfällt, in welcher auch die Oberfläche 28 des Positionierelements 30 liegt. In diesem Fall läßt sich insbesondere die den Randbereich 102 des Positionierelemente 30 tragende Oberfläche 101 des Tragflansches 100 als polierte Fläche ausführen und somit als Präzisionsfläche, welche wiederum die gesamte Positioniereinheit 80 aufgrund der aufliegenden und ebenfalls poliert ausführbaren Oberfläche 28 des Positionierelements 30 präzise hält. Gleichzeitig läßt sich die der Oberfläche 101 gegenüberliegende Oberfläche 103 des Tragflansches 100 ebenfalls als polierte Fläche ausführen, so daß eine präzise Anordnung der ganzen Positioniereinheit relativ zur Fläche 103 des Tragflansches 100 möglich ist.

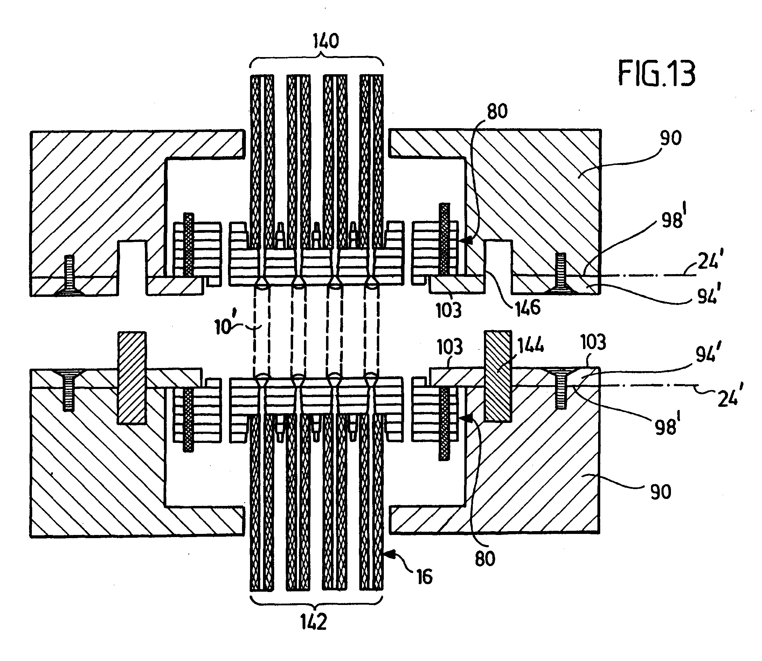

Beispielsweise besteht in diesem Fall die Möglichkeit, wie in Fig. 13 dargestellt, zwei derartige Kopfteile gemäß dem zweiten Ausführungsbeispiel einander gegenüberliegend anzuordnen und als Mikrosteckverbindung einzusetzen, um Licht aus einem Satz 140 von Lichtleitern 16 in einen zweiten Satz 142 von Lichtleitern 16 einzukoppeln.

Vorzugsweise läßt sich eine derartige Mikrosteckverbindung dadurch herstellen, daß die beiden Gehäuse 90 der beiden Kopfteile über Formschlußelemente 144 und 146 formschlüssig zueinander positionierbar und relativ zueinander fixierbar sind, wobei durch die formschlüssige Positionierung der Gehäuse 90 zwangsläufig auch eine exakte Positionierung der Endflächen 12 der Lichtleiter 16 derart möglich ist, daß das aus einer Endfläche 12, beispielsweise des ersten Satzes 140 von Lichtleitern 16 austretende Lichtstrahlen 10' in die Endfläche 12 des zweiten Satzes 142 von Lichtleitern 16 im wesentlichen verlustfrei einkoppelbar ist, wobei die Mikrolinsen 132 jeweils so gewählt sind, daß sie einen im wesentlichen parallelen Lichtstrahl 10 in die jeweilige Endfläche 12 einkoppeln, wobei die präzise Ausführung der Flächen 103 des Tragflansches 100 gleichzeitig die Folge hat, daß die geometrischen Flächen 24 beider Kopfteile in exaktem Abstand und vorzugsweise parallel zueinander ausgerichtet sind.

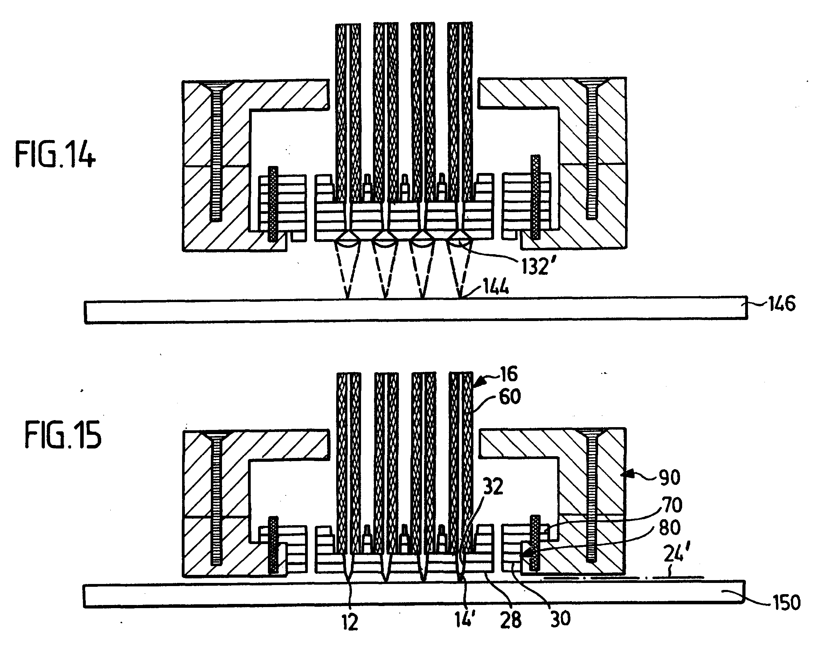

Bei einem dritten Ausführungsbeispiel eines erfindungsgemäßen Kopfteils (Fig. 14) sind ebenfalls Mikrolinsen 132' vorgesehen, diese sind aber so dimensioniert, daß sie die austretenden Lichtstrahlen 10'' jeweils auf einen Fleck 144 fokussieren, so daß beispielsweise in diesem Fall das erfindungsgemäße Kopfteil dazu eingesetzt werden kann, mit mehreren Lichtstrahlen 10'' Parallellithographie einer lichtempfindlichen Schicht 146 auf einem Träger zu betreiben.

Bei einem vierten Ausführungsbeispiel eines erfindungsgemäßen Kopfteils, dargestellt in Fig. 15, sind die Lichtwellenführungen 14' vorzugsweise als getaperte Fasern ausgebildet und durch das Positionierelement 30 soweit hindurchgeführt, daß deren Endflächen 12 in einer geometrischen Ausrichtfläche 24' liegen, die im Abstand von der Oberfläche 28 des Positionierelements 30 steht. In diesem Fall sind die Lichtwellenführungen 14' der Lichtleiter 16 durch Fügen in den Positionierdurchbrüchen 32 des Positionierelements 30 zu fixieren und vorzugsweise ist auch im Bereich der Vorpositionierelemente, Halteelemente und des Fixierelements eine Fügeverbindung vorgesehen.

Darüber hinaus sind bei diesem Ausführungsbeispiel die Lichtwellenführungen 14' so ausgeführt, daß sie in Richtung der Endfläche 12 getapert verlaufen und damit eine noch engere Führung des Lichts bedingen, so daß die Endfläche 12 hinsichtlich ihres Querschnitts geringer ist als der Querschnitt der Lichtwellenführungen 14' im vom Schutzmantel 60 umgebenden Abschnitt der Lichtleiter 16.

Die Tatsache, daß die geometrische Ausrichtfläche 24' im Abstand von dem Positionierelement 30 angeordnet ist erlaubt weiterhin, die Endflächen 12 in ganz geringem Abstand von einem zu belichtenden Substrat 150, beispielsweise ebenfalls für eine Lithographieanwendung, zu positionieren und somit eine hohe Präzision zu erhalten.

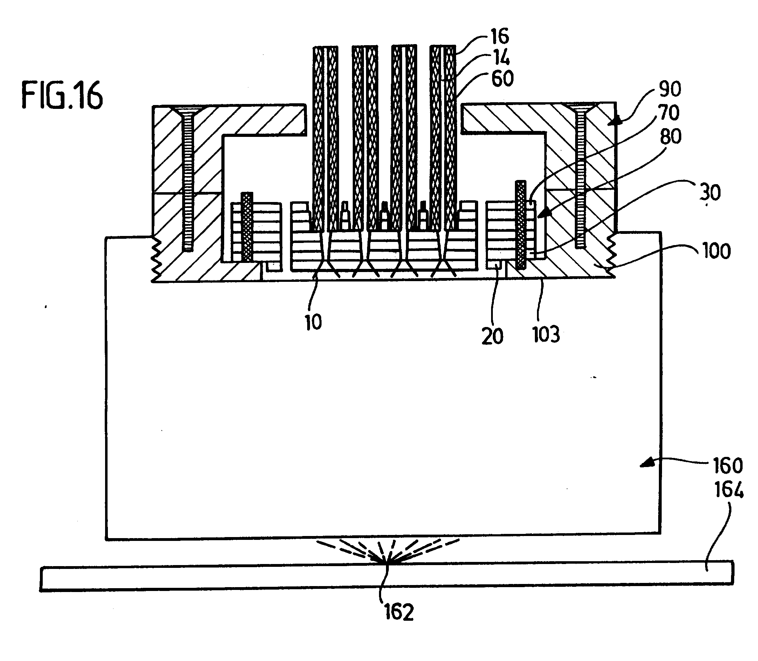

Bei einem fünften Ausführungsbeispiel des erfindungsgemäßen Kopfteils, dargestellt in Fig. 16 wird eine Positioniereinheit 80 gemäß dem ersten Ausführungsbeispiel verwendet, so daß hierzu vollinhaltlich auf die Ausführungen zum ersten Ausführungsbeispiel Bezug genommen werden kann. Im Gegensatz zum ersten Ausführungsbeispiel wird das Gehäuse 90 mit einem Mikroskopobjektiv 160 versehen, welches alle divergenten Lichtstrahlen 10 nochmals verkleinert auf einem Flächenbereich 162, beispielsweise auf einem Waver 164, abbildet, um Parallellithographie beispielsweise zur Herstellung von Halbleiterstrukturen zu betreiben, wie dies in der Patentanmeldung P 196 26 176.7-51 beschrieben ist. In diesem Fall erfolgt die präzise Anordnung des Mikroskopobjektivs 160 relativ zur Positioniereinheit 80 über eine exakte Positionierung derselben an dem Gehäuse 90, beispielsweise ebenfalls eine exakte Positionierung relativ zur Fläche 103 des Tragflansches 100.

## Patentansprüche

1. Kopfteil zur Erzeugung mehrerer, sich im wesentlichen in einer Richtung ausbreitender und in definiertem Abstand voneinander angeordneter Lichtstrahlen (10), umfassend
eine Vielzahl von Lichtleitern (16) mit Endflächen (12), aus denen jeweils ein Lichtstrahl (10) austritt,
eine Positioniereinheit (80) umfassend ein plattenförmiges Positionierelement (30), welches eine der Zahl der Lichtleiter (16) entsprechende Zahl von die Lichtleiter (16) in definiertem Abstand zueinander positionierenden Positionierdurchbrüchen (32) aufweist, und eine Fixierung für die Lichtleiter (16), welche die Lichtleiter (16) derart relativ zu der Positioniereinheit (80) fixiert hält, daß nahe einer Seite des Positionierelements (30) die Endflächen (12) der Lichtleiter (16) in einer definierten geometrischen Ausrichtfläche (24) liegen.

2. Kopfteil nach Anspruch 1, dadurch gekennzeichnet, daß die Fixierung ein für die Lichtstrahlen (10) durchlässiges und sich flächenhaft erstreckendes Anlageelement (20) umfaßt, welches in der definierten geometrischen Ausrichtfläche (24) liegende Anlageflächen (22) aufweist, an welchen die Lichtleiter (16) mit ihren Endflächen (12) anliegen.

3. Kopfteil nach Anspruch 1 oder 2, dadurch gekennzeichnet, daß das Positionierelement (30) einen eine Lichtwellenführung (14) des Lichtleiters (16) positionierenden Positionierdurchbruch (32) aufweist.

4. Kopfteil nach einem der voranstehenden Ansprüche, dadurch gekennzeichnet, daß auf einer der Ausrichtfläche (24) gegenüberliegenden Seite des Positionierelements (30) mindestens ein Vorpositionierelement (40, 42) für die Lichtleiter vorgesehen ist.

5. Kopfteil nach Anspruch 4, dadurch gekennzeichnet, daß das mindestens eine Vorpositionierelement (40, 42) die Lichtleiter relativ zu dem jeweiligen Positionierdurchbruch (32) im Positionierelement (30) vorpositionierende Vorpositionierdurchbrüche (44, 46) aufweist.

6. Kopfteil nach Anspruch 5, dadurch gekennzeichnet, daß die Vorpositionierdurchbrüche (44, 46) einen sich in Richtung der Positionierdurchbrüche (32) verkleinernden Querschnitt aufweisen.

7. Kopfteil nach Anspruch 5 oder 6, dadurch gekennzeichnet, daß ausgehend von dem jeweiligen Positionierdurchbruch (32) aufeinanderfolgende Vorpositionierdurchbrüche (44, 46) aufeinanderfolgender Vorpositionierelemente (40, 42) von Vorpositionierelement (40) zu Vorpositionierelement (42) einen größeren Querschnitt aufweisen.

8. Kopfteil nach einem der voranstehenden Ansprüche, dadurch gekennzeichnet, daß auf einer der Ausrichtfläche (24) gegenüberliegenden Seite des Positionierelements (30) mindestens ein Halteelement (50, 52) vorgesehen ist, welches einen Schutzmantel (60) des Lichtleiters (16) aufnehmende Haltedurchbrüche (54, 56) aufweist.

9. Kopfteil nach einem der voranstehenden Ansprüche, dadurch gekennzeichnet, daß auf einer der Ausrichtfläche (24) gegenüberliegenden Seite des Positionierelements (30) ein Fixierelement (70) vorgesehen ist, an welchem die Lichtleiter fixierbar sind.

10. Kopfteil nach Anspruch 9, dadurch gekennzeichnet, daß das Fixierelement (70) Durchbrüche (72) für die Lichtleiter (16) aufweist.

11. Kopfteil nach Anspruch 9 oder 10, dadurch gekennzeichnet, daß die Lichtleiter (16) an dem Fixierelement (70) durch Fügen fixierbar sind.

12. Kopfteil nach einem der voranstehenden Ansprüche, dadurch gekennzeichnet, daß das Positionierelement (30) und das Anlageelement die Positioniereinheit (80) bilden.

13. Kopfteil nach Anspruch 12, dadurch gekennzeichnet, daß das Positionierelement (30) auf dem Anlageelement (20) aufliegt.

14. Kopfteil nach Anspruch 13, dadurch gekennzeichnet, daß das Anlageelement (20) und das Positionierelement (30) formschlüssig miteinander verbunden sind.

15. Kopfteil nach Anspruch 14, dadurch gekennzeichnet, daß das Anlageelement (20) und das Positionierelement (30) mittels Passungsdurchbrüche (84) und diese durchsetzende Passungsstifte (82) verbunden sind.

16. Kopfteil nach einem der Ansprüche 11 bis 14, dadurch gekennzeichnet, daß die Positioniereinheit (80) mindestens ein Vorpositionierelement (40, 42) umfaßt.

17. Kopfteil nach einem der Ansprüche 12 bis 16, dadurch gekennzeichnet, daß die Positioniereinheit (80) das mindestens eine Halteelement (50, 52) umfaßt.

18. Kopfteil nach einem der Ansprüche 12 bis 17, dadurch gekennzeichnet, daß die Positioniereinheit (80) das Fixierelement (70) umfaßt.

19. Kopfteil nach einem der Ansprüche 12 bis 18, dadurch gekennzeichnet, daß das jeweilige Element (40, 42, 50, 52, 70) formschlüssig mit dem Positionierelement verbunden ist.

20. Kopfteil nach Anspruch 19, dadurch gekennzeichnet, daß das jeweilige Element (40, 42, 50, 52, 70) und das Positionierelement (30) mittels Passungsdurchbrüchen (84) und die Passungsdurchbrüche durchsetzenden Passungsstiften (82) verbunden sind.

21. Kopfteil nach einem der Ansprüche 4 bis 20, dadurch gekennzeichnet, daß das mindestens eine Vorpositionierelement (40, 42) als plattenförmiges Teil ausgebildet ist.

22. Kopfteil nach einem der Ansprüche 4 bis 21, dadurch gekennzeichnet, daß das mindestens eine Halteelement (50, 52) als plattenförmiges Teil ausgebildet ist.

23. Kopfteil nach einem der Ansprüche 4 bis 22, dadurch gekennzeichnet, daß das Fixierelement (70) als plattenförmiges Teil ausgebildet ist.

24. Kopfteil nach einem der Ansprüche 12 bis 23, dadurch gekennzeichnet, daß die Positioniereinheit aus einem Stapel (80) aus plattenförmigen Teilen hergestellt ist.

25. Kopfteil nach einem der voranstehenden Ansprüche, dadurch gekennzeichnet, daß die Durchbrüche (32, 44, 46, 54, 56, 72) in dem jeweiligen Element (30, 40, 42, 50, 52, 70) durch Lithographie und/oder Tiefenätzen herstellbar sind.

26. Kopfteil nach einem der voranstehenden Ansprüche, dadurch gekennzeichnet, daß die Fixierung der Lichtleiter (16) eine Fügeverbindung zwischen den Lichtleitern (16) und der Positioniereinheit (80) umfaßt.

27. Kopfteil nach Anspruch 26, dadurch gekennzeichnet, daß die Fixierung eine Fügeverbindung zwischen den Lichtleitern (16) und dem Positionierelement (30) umfaßt.

28. Kopfteil nach Anspruch 25 oder 26, dadurch gekennzeichnet, daß die Fixierung eine Fügeverbindung zwischen der Lichtwellenführung (14) und der Positioniereinheit (80) umfaßt.

29. Kopfteil nach einem der Ansprüche 26 bis 28, dadurch gekennzeichnet, daß die Fixierung die Fügeverbindung zwischen den Lichtleitern (16) und dem Fixierelement (70) umfaßt.

30. Kopfteil nach einem der Ansprüche 2 bis 29, dadurch gekennzeichnet, daß zwischen den Endflächen (12) und den Anlageflächen (22) ein brechungsindexadaptierendes Medium vorgesehen ist.

31. Kopfteil nach einem der voranstehenden Ansprüche, dadurch gekennzeichnet, daß die Positioniereinheit (80) in einem Gehäuse (90) fixiert ist.
